# EUROPÄISCHE PATENTSCHRIFT

(11) **EP 0 655 318 B1**
(45) Veröffentlichungstag und Bekanntmachung des Hinweises auf die Patenterteilung: **07.01.1998**
(21) Anmeldenummer: 94108122.6
(22) Anmeldetag: 26.05.1994
(51) Int. Cl.: B29C 70/34, B29C 59/02, B29C 53/56

(54) **Verfahren zur Herstellung eines Walzenkörpers**
Method for producing a roller body
Procédé de fabrication d'un corps cylindrique

(30) Priorität: 16.11.1993 DE 4339097
(43) Veröffentlichungstag der Anmeldung: 31.05.1995
(73) Patentinhaber: Firma Carl Freudenberg, 69469 Weinheim (DE)
(72) Erfinder: Pfirrmann, Horst, D-69517 Gorxheimertal (DE); Iffland, Burkhard, D-69469 Weinheim (DE); Freudenberg, Ulrich, Dr., D-74889 Sinsheim (DE); Gorges, Dirk, D-68167 Mannheim (DE)

(56) Entgegenhaltungen:
- EP-A- 0 203 210
- US-A- 3 970 495

## Beschreibung

Die Erfindung betrifft ein Verfahren zur Herstellung eines Walzenkörpers nach dem Oberbegriff des Patentanspruchs 1.

Ein Verfahren dieser Art ist aus US-A-3 970 495 für die Herstellung von rotationssymmetrischen Körpern wie Wellen oder dgl. bekannt.
Aus EP-A-0 203 210 sind ein Verfahren und eine Vorrichtung zur Herstellung einer zusammengesetzten Welle mit einem zylindrischen Teil und wenigstens einem konischen Endteil zu entnehmen, wobei in dem Endbereich ebene Flächen mit in axialer Richtung konischem Verlauf über den gesamten Umfang mit einem in axialer Richtung wirkenden Werkzeug aufgepreßt werden.

Der Erfindung liegt die Aufgabe zugrunde, ein solches Verfahren derart weiter zu entwickeln, daß ein Walzenkörper von unrunder Querschnittsgestalt mit genauen Außenflächen am zylindrischen Bereich des Walzenkörpers bereitgestellt wird.

Zur Lösung dieser Aufgabenstellung dient erfindungsgemäß der Gegenstand von Anspruch 1.
Auf vorteilhafte Ausgestaltungen nehmen die Unteransprüche Bezug.

Bei dem erfindungsgemäßen Verfahren ist es vorgesehen, daß der Walzenkörper auf dem Dorn mit zumindest einem pressenden Werkzeug in eine unrunde Querschnittsgestalt auf einem Teilbereich des Außenumfangs des zylindrischen Bereichs des Walzenkörpers durch eine radial einwirkende Preßkraft überführt und durch anschließende Aushärtung des ihn bildenden Werkstoffs in der unrunden Querschnittsgestalt bleibend fixiert wird. Das Anwendungsspektrum des erhaltenen Walzenkörpers ist dadurch wesentlich erweitert und beispielsweise möglich, die nachträglich angeformten und gegebenenfalls eben ausgebildeten Flächen zur vereinfachten Anbringung von Werkzeugen oder anderen, sekundären Maschinenelementen zu benutzen. Dabei ist von erheblicher Bedeutung, daß mechanische Vorarbeiten wegen der großen Maßhaltigkeit der durch den Preßvorgang erzeugten Flächen weitestgehend entfallen können und daß sich keine Beeinträchtigung der mechanischen Festigkeit des Walzenkörpers ergibt. Dieser kann dadurch Anwendungen zugänglich gemacht werden, bei denen mit erheblichen mechanischen Belastungen zu rechnen ist. Der Walzenkörper besitzt außerdem ein besonders geringes Trägheitsmoment. Er ist dadurch geeignet, große Beschleunigungs- und Abbremskräfte aufzunehmen.

Um die Festigkeitseigenschaften des Walzenkörpers noch weiter zu verbessern hat es sich als vorteilhaft bewährt, wenn dieser zur Aushärtung des ihn bildenden Werkstoffs erwärmt wird.

Die Erfindung wird nachfolgend anhand der in der Anlage beigefügten Zeichnung weiter verdeutlicht.

Es zeigen:
Fig. 1 die erste Stufe des erfindungsgemäßen Verfahrens.
Fig. 2 die zweite Stufe des erfindungsgemäßen Verfahrens.

### - jeweils in schematischer Darstellung -

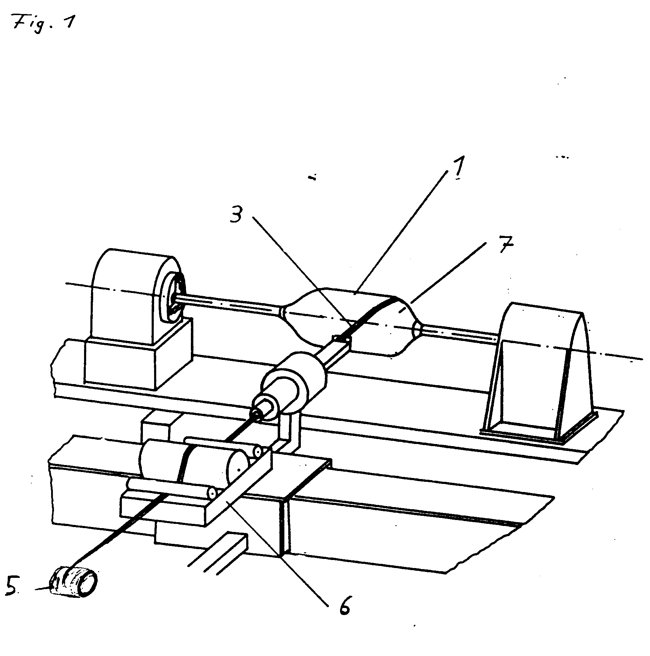

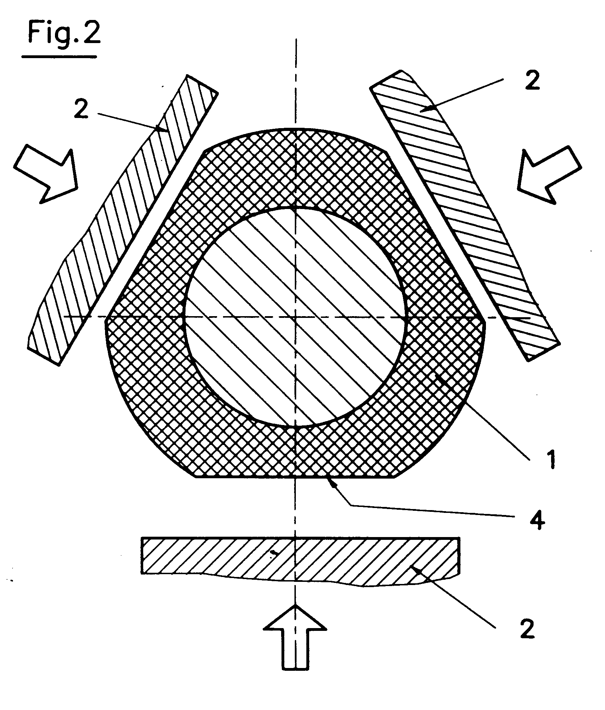

Die in Fig. 1 gezeigte Verfahrensstufe hat zum Ziel, einen Walzenkörper 1 zu erzeugen, der von zylindrischer Gestalt sein kann. Dazu wird ein Verstärkungsstreifen 3, der Textilfasern enthält, von einer Vorratsrolle 5 abgewickelt und in einem Bad 6 mit flüssigem Epoxid- oder Phenolharz getränkt. Der Streifen wird anschließend nach Art einer Schraubenwindung auf den Außenumfang eines zylindrischen und um seine Achse rotierenden Dorns 7 aufgewickelt. Dabei entsteht kontinuierlich fortschreitend ein hohler Walzenkörper, der aufgrund des in dem Epoxid- beziehungsweise Phenolharz enthaltenen Härters schnell eine gute Eigenfestigkeit erlangt. Der Walzenkörper 1 kann dadurch unmittelbar nach seiner Herstellung zusammen mit dem Dorn 7 in ein Preßwerkzeug überführt werden. Dieses kann beispielsweise den in Fig. 2 schematisch wiedergegebenen Aufbau haben und drei Preßbacken umfassen, die von übereinstimmender Größe sind und zueinander einen Winkel von jeweils 120° einschließen. Die Preßbacken 2 werden anschließend zeitgleich der in der Fig. 2 durch offene Pfeile angedeuteten Weise verschoben, wobei sie in Eingriff mit dem Walzenkörper 1 gelangen und dessen Überführung in die gezeigte Querschnittsgestalt bewirken. Diese wird durch nachfolgende Aushärtung des in dem Walzenkörper 1 enthaltenen Epoxid- oder Phenolharzes bleibend fixiert. Die Aushärtung wird vorzugsweise in einer Temperkammer vorgenommen, in welche der noch in dem Preßwerkzeug 2 enthaltene Walzenkörper 1 für die Dauer der Aushärtungszeit gebracht wird.

Anstelle des in Fig. 2 gezeigten Preßwerkzeuges besteht die Möglichkeit, abweichende Ausführungen zu verwenden und beispielsweise Ausführungen, die eine abweichende Zahl von Preßbacken haben und/oder Preßbacken einer voneinander oder von Fig. 2 abweichenden Gestalt.

In jedem Falle bleibt hervorzuheben, daß es das erfindungsgemäße Verfahren ermöglicht, Walzenkörper mit einer unrunden Querschnittsgestalt zu erzeugen, die von hervorragender Maßhaltigkeit sind. Der Verstärkungsstreifen 3 erstreckt sich im fertigen Produkt in Umfangsrichtung parallel zur Oberfläche. Trotz der Möglichkeit, auf den gegebenenfalls eben ausgebildeten Umfangsflächen sekundäre Maschinenelemente stark vereinfacht anbringen zu können, weisen die nach dem erfindungsgemäßen Verfahren erhaltenen Walzenkörper daher ausgezeichnete Festigkeitseigenschaften auf.

Die Lagerung des nach dem erfindungsgemäßen Verfahrens erhaltenen Walzenkörpers kann in an sich bekannter Weise unter Verwendung von Lagerschilden erfolgen, die nachträglich mit den Stirnseiten verbunden werden. Andere Arten der Lagerung sind ebenfalls möglich und nicht Gegenstand der vorliegenden Erfindung.

## Patentansprüche

1. Verfahren zur Herstellung eines Walzenkörpers (1) aus Epoxid- oder Phenolharz, bei dem ein mit dem Epoxid- oder Phenolharz getränkter, Fasern enthaltender Streifen auf einen Dorn aufgewickelt und nachfolgend von dem Dorn abgenommen und verfestigt wird, dadurch gekennzeichnet, daß der Walzenkörper (1) von zylindrischer Gestalt vor der Verfestigung und der Abnahme von dem Dorn mit zumindest einem pressenden, auf einen Teilbereich des Außenumfangs des zylindrischen Bereichs des Walzenkörpers (1) radial gerichtet einwirkenden Werkzeug (2) in eine unrunde Querschnittsgestalt überführt und durch anschließende Aushärtung des ihn bildenden Werkstoffs in der unrunden Querschnittsgestalt bleibend fixiert wird.

2. Verfahren nach Anspruch 1, dadurch gekennzeichnet, daß der Walzenkörper zur Aushärtung des ihn bildenden Werkstoffs erwärmt wird.

3. Verfahren nach Anspruch 1 oder 2, dadurch gekennzeichnet, daß der Walzenkörper (1) durch das pressende Werkzeug (2) mit einer unrunden Querschnittsgestalt mit zumindest einer eben ausgebildeten Umfangsfläche (4) versehen wird.

## Claims

1. A method for the production of a roller body (1) from epoxide or phenol resin, in which a strip impregnated with the epoxide or phenol resin and containing fibres is wound onto a mandrel and is subsequently removed from the mandrel and consolidated, characterized in that, before consolidation and removal from the mandrel, the roller body (1) of cylindrical shape is converted into a non-circular cross-sectional shape by means of at least one pressing tool (2) acting in a radially directed manner on a portion of the outer circumference of the cylindrical region of the roller body (1) and is set permanently in the non-circular cross-sectional shape as a result of the subsequent curing of the material forming it.

2. A method according to claim 1, characterized in that the roller body is heated in order to cure the material forming it.

3. A method according to claim 1 or 2, characterized in that the roller body (1) is provided by means of the pressing tool (2) with a non-circular cross-sectional shape having at least one circumferential face (4) of plane design.

## Revendications

1. Procédé de fabrication d'un corps cylindrique (1) constitué de résine époxyde ou phénolique, au cours duquel une bande contenant des fibres, imbibée de résine époxyde ou phénolique est enroulée sur un mandrin et ensuite enlevée du mandrin et consolidée, caractérisé en ce que le corps cylindrique (1) de forme cylindrique avant la consolidation et avant l'enlèvement du mandrin est transformé par au moins un outil de compression (2), agissant suivant une orientation radiale sur une partie du périmètre extérieur de la région cylindrique du corps cylindrique (1), en une forme à section non-circulaire et en ce qu'il est fixé de façon permanente en cette forme à section non-circulaire par un durcissement subséquent du matériau dont il est constitué.

2. Procédé selon la revendication 1, caractérisé en ce que le corps cylindrique est chauffé pour le durcissement du matériau dont il est constitué.

3. Procédé selon la revendication 1 ou 2, caractérisé en ce que le corps cylindrique (1) est muni par l'outil de compression (2) d'une forme de section non-circulaire avec au moins une surface périphérique (4) de forme plane.
